Europäisches Patentamt

European Patent Office

Office européen des brevets

(11) Publication number: **0 407 005 A1**

# EUROPEAN PATENT APPLICATION

(21) Application number: 90304318.0

(51) Int. Cl.⁵: **G07F 7/12**

(22) Date of filing: 23.04.90

(30) Priority: **10.06.89 GB 8913417**

(43) Date of publication of application:
**09.01.91 Bulletin 91/02**

(84) Designated Contracting States:
**AT BE CH DE DK ES FR GB GR IT LI LU NL SE**

(71) Applicant: THORN EMI plc
4 Tenterden Street
London W1A 2AY(GB)

(72) Inventor: Sibbald, Alastair
18, Horseguards Drive
Maidenhead, Berkshire, SL6 1XL(GB)
Inventor: Richardson, Timothy
1, Iris Close, The Willows
Aylesbury, Buckinghamshire, HP21 8YZ(GB)
Inventor: Holcroft, Brian
31 Parkview Court
High Wycombe, Buckinghamshire, HP12 3AR(GB)

(74) Representative: Hurst, Richard Arthur
Alexander et al
THORN EMI Patents Limited The Quadrangle
Westmount Centre Uxbridge Road
Hayes Middlesex UB4 0HB(GB)

(54) Verification device for a security system.

(57) A verification device (1) for use in a security system includes a Langmuir-Blodgett film (7) of predetermined composition such that light transmitted or reflected by the film (7) has precisely modified spectral characteristics.

Fig. 2.

## VERIFICATION DEVICE FOR A SECURITY SYSTEM

This invention relates to verification devices for security systems and has particular, though not exclusive, relevance to security systems for access control.

There are a wide variety of security systems for access control presently in use. The verification devices used in such systems include, for example, a mechanical key in the case of a mechanical security system, a magnetic strip card in the case of an electromagnetic system, or a punched card in the case of an opto-electronic system. Such devices should be difficult to forge, reliable, mechanically robust, low-cost and ideally be capable of remote, non-contact operation. Whilst optically verifiable devices fulfill the latter characteristic, such devices generally have other shortcomings.

In U.S. Patent No. 4576439, there is described an optically verifiable verification device incorporating a reflective diffraction grating comprising a metallic pattern carried on a substrate. In order to verify the device, the device is illuminated by polychromatic light, the grating being effective to separate the illuminating light into at least one pair of light beams of contrasting colours. Such a device suffers the disadvantage, however, that its fabrication requires relatively complex photolithography techniques and is thus relatively expensive.

Whilst the use of coloured inks on, for example, bank notes may be used as a crude means of authentification, verification of the note being by means of spectral analysis of the light reflected from the surface of the note, such a system is not very secure. There may be an appreciable variation in colour between different batches of ink, and little control over the surface density of the ink during its application. Hence the verification system needs to be relatively lax, thus creating the possibility that a forger may be able to produce notes which are passed by the system.

It is an object of the present invention to provide an optically verifiable verification device, together with a security system for verifying such a device, wherein the disadvantages of such known optically verifiable verification devices are at least alleviated.

According to a first aspect of the present invention a verification device for a security system incorporates: a Langmuir-Blodgett film incorporating at least one dye, the thickness and composition of the film being controlled such that the film has precisely definable optical absorption characteristics so as to enable the device to be optically verified.

By employing such a Langmuir-Blodgett film, highly specific, repeatable optical characteristics are achieved which will not easily be forgeable.

The Langmuir-Blodgett film may be formed from dye molecules. Alternatively, or additionally, the Langmuir-Blodgett film may be doped with a dye.

The thickness of the film may be controlled so as to induce optical interference effects within the film. Thus increases or decreases in the reflected or transmitted intensity of light incident upon the film will occur at particular wavelengths of the interrogating light, and these effects may be utilised to gain enhanced security capability.

The film may incorporate at least two dyes so as to cause absorption of light at least at two different predetermined wavelengths. These wavelengths may be chosen so as to be within the ultra-violet, visible or infra-red regions of the electromagnetic spectrum.

This enhances the security of the system by making forgery of the verification device more difficult.

According to a second aspect of the present invention a security system comprises: a light source, a verification device according to the first aspect of the invention, and an analysis system for analysis of light from the souce after it has been modified by the verification device.

One particular verification device in accordance with the present invention together with a system for verifying the device will now be described, by way of example only, with reference to the accompanying drawings of which:-

Figure 1 is a perspective view of the device;

Figure 2 shows an exploded sectional view of the device the view being shown on a larger scale to that of Figure 1;

Figure 3 is a schematic illustration of the system;

Figure 4 shows the optical absorption spectra of differing thicknesses of multi-layer Langmuir-Blodgett films;

Figure 5 shows the optical absorption characteristics of differing numbers of Langmuir-Blodgett monolayers.

Figure 6 shows the absorbance spectra for dye-doped Langmuir-Blodgett films;

Figures 7 and 8 show two alternative analysis arrangements for incorporation into the system of Figure 3.

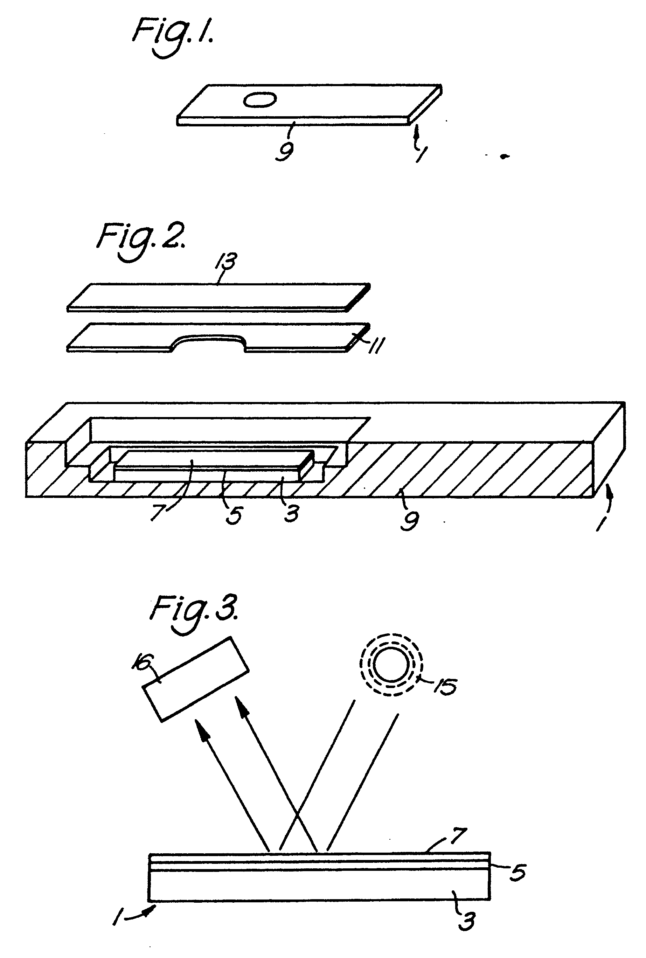

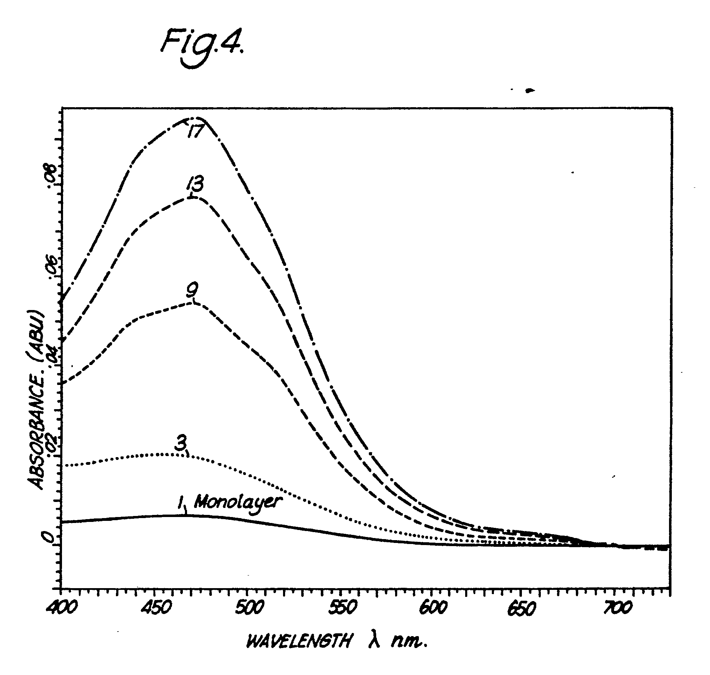

The security system to be described is designed to control access to, for example, a building. Referring firstly to Figures 1, 2 and 3, the verification device, referenced generally as 1, for use in the system includes an optically flat, inert substrate 3 such as part of a silicon wafer. The substrate 3 carries an optically reflective layer 5 such as aluminium. On to the reflective layer 5 is applied a Langmuir-Blodgett film 7. This arrangement constitutes the basic optical device hereinafter referred to as an optical "chip".

The chip 3, 5, 7 is mounted in a holder 9 and above the chip is mounted a field-stop 11 so as to clearly define the optically active area of the device. On top of the field-stop 11 is mounted a suitably transparent protective window 13 such as a quartz disc or plate.

The device 1 shown in Figure 1 typically has dimensions of 2 mm thickness, 15 mm length and 8 mm width.

The Langmuir-Blodgett film employed in the device 1 is applied by successive transfer of one or more monolayers from a floating monolayer of suitable molecules on the surface of a liquid onto the silicon wafer which has been precoated with aluminium as the wafer is drawn through the liquid/air interface. This is the well known Langmuir-Blodgett deposition technique as described, for example, in Advances in Physics, 1985, Vol. 34, No. 4, 475-512. Each individual monolayer possesses a specific characteristic thickness, typically several nanometers, which consequently enables very precise control over the total thickness of the final multilayer film. The monolayer thickness is dependent primarily on the nature of the particular molecule which is deposited: it does not vary from one deposition to the next, hence film uniformity is maintained over the entire substrate surface. It is thus possible to deposit a layer over a large surface area and then divide this into a larger number of smaller areas whilst still maintaining the film uniformity. Hence a large number of reflector "chips" 3, 5, 7 may be produced by only a single multilayer deposition process.

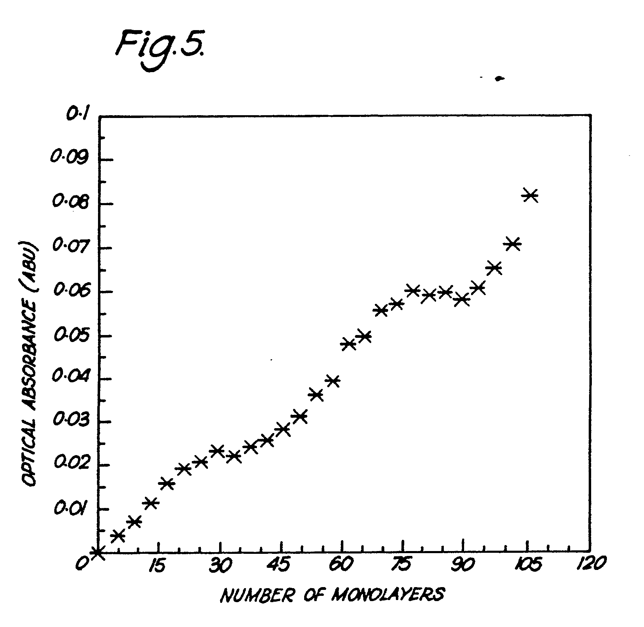

Referring now particularly to Figure 3, verification of the device 1 is carried out by first illuminating the device with a light source 15 and then by analysing the reflected light using an analysis arrangement 16 which will be described in more detail hereafter. If the absorption spectra of the reflected light agrees with certain predetermined characteristics, then the system verifies the device allowing a user access to the building. If however the absorption spectra does not agree, then access is denied.

The spectral characteristics of the Langmuir-Blodgett film may be precisely controlled in several ways in order to provide several levels of complexity in the resulting spectra monitored by the analysis arrangement 16.

At the simplest level, the thickness of the Langmuir-Blodgett film 7 may be used to determine its optical absorption and thus the intensity of the reflected light monitored by the analysis arrangement 16.

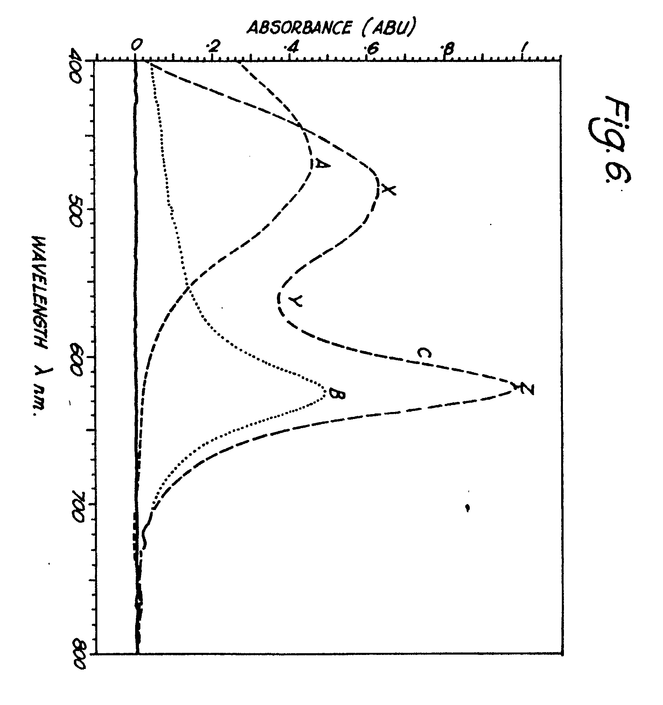

Figure 4 shows the optical absorption spectra of several thicknesses of Langmuir-Blodgett films composed of 90% behenic acid doped with 10% hemicyanine dye. Such dye molecules may be mixed directly with "optically-inert" Langmuir-Blodgett film forming materials (such as w-tricosenoic acid or behenic acid).

The optical absorption is measured in terms of absorbance units, abu which are logarithmic units of the ratio of the light intensity reflected from the film to that of light intensity incident on the film.

The optical absorption of a layer of material is generally proportional to its thickness, if however the thickness of the layer is so small as to approach the wavelength of light, additional enhanced transmission and reflection effects may be also observed due to wave-interference phonomena. This is manifest as either an increase or decrease in the apparent optical reflectivity of the composite film 7, 5. In particular, if the optical path length of the Langmuir-Blodgett film 7 is exactly 1/4 the wavelength of the incident light, the film will act as an anti-reflection coating to radiation of that wavelength and there will be an apparent increase in optical absorption of the light incident on the film 7.

If, however, the thickness of the film 7 is arranged such that the optical path length is exactly 1/2 a wavelength of the incident light, then a wavelength-specific high-reflectivity surface is produced and a corresponding apparent decrease in absorption occurs. This effect is illustrated in Figure 5. The effect is manifest in the optical absorption spectra of a particular Langmuir-Blodgett film as a sinsusoidal modulation of the absorbance at a specific wavelength as a function of film thickness.

Thus by carefully choosing the number of monolayers deposited by the Langmuir-Blodgett deposition technique to correspond to either 1/4 or 1/2 wavelength layers, it is possible to tailor the amount of light reflected by the film 7 and thus measured by the analysis arrangement 16 at particular wavelengths of incident light. Thus the ability to control the spectral characteristics of the film 7 by means other than its intrinsic property of optical absorption provides additional spectral control, thus making verification of the device 1 more exact. Replication of the verification device by a forger is also made correspondingly difficult.

A further level of complexity in the optical spectra measured by the analysis arrangement 16 may be provided by including two or more dyes in the film 7.

Langmuir-Blodgett films may be formed from many dye molecules, such as those in the phthalocyanine family, as well as being mixed with dyes to form dye-doped films. The mixing ratios may be controlled with great precision by standard volumetric and gravimetric techniques; hence two or more dyes may be mixed together so as to produce a more complex spectral absorption characteristic than a single dye alone could produce. Alternatively, a Langmuir-Blodgett film containing one dye type could be deposited onto another film containing a different dye type to form a composite multilayer.

Referring to Figure 6, the advantages of employing a two-dye system may be seen. Graph A within Figure 6 shows the absorption spectrum of a 25-layer Langmuir-Blodgett film of the optically inert behenic acid doped with 10% hemicyanine dye, whilst graph B shows the absorption spectrum of a 15-layer Langmuir-Blodgett film of behenic acid doped with 10% silicon substituted phthalocyanine dye. Both of these characteristics exhibit single absorbance maxima. Graph C shows the resulting absorption spectrum of behenic acid containing a mixture of both aforementioned dyes, in which two distinct absorbance maxima are present.

Analysis of light reflected from such a film by the analysis arrangement 16 may take place by the arrangement picking out several absorption maxima and minima, such as points x, y and z in graph C. The arrangement 16 then calculates the ratios of the relative intensities of light received by the arrangement at these specific wavelengths and uses these ratios as a method of verification or denial of the device 1.

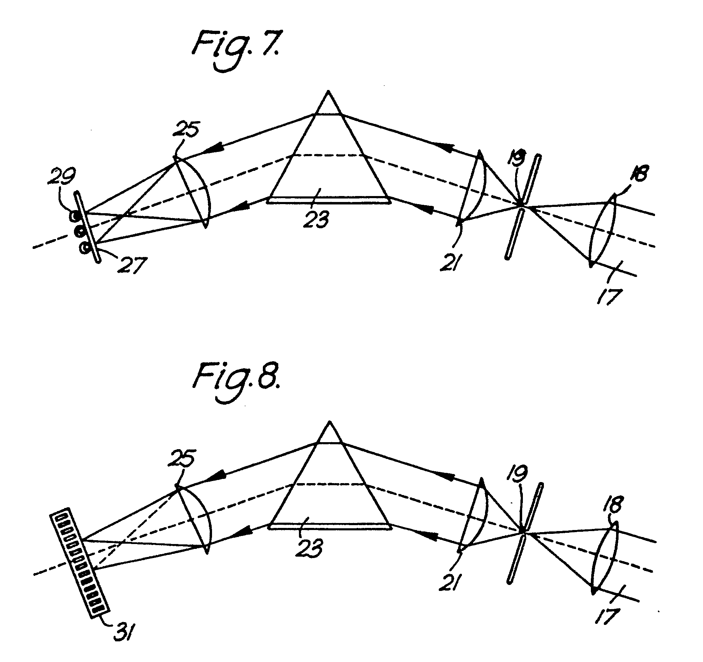

Two possible constructions of the analysis arrangement 9 are shown in Figures 7 and 8. Referring firstly to Figure 7, light 17 reflected from the verification device 1 is focused on to a slit 19 by lens 18, the light then passing through a collimating lens 21. The light then passes through a prism 23 wherein it is the prism dispersing the light which causes chromatic separation. A telescope lens 25 then focuses the chromatically-separated light through multiple-slit detector windows 27 on to spaced apart photodiodes 29. Thus each photodiode 29 will be receptive to light of a different wavelength.

The number of photodiodes chosen for the arrangement 16 will depend upon the number of discrete wavelength intensities desired to be analysed.

Referring now also to Figure 8, by replacement of the discrete photodiodes 29 and their associated multiple-slit detector windows 27 by a linear photodiode array 31, the spectra of the reflected light from the device 1 may be derived in more detaol. It will be appreciated that the prism may easily be replaced by a diffraction grating to attain chromatic separation of the reflected light.

It will be appreciated that a system in accordance with the present invention need not' necessarily employ a white light source and chromatic separation in order to analyse the resultant spectra. Any light source having an emission wavelength from the ultra-violet through visible to infra-red may be employed for verification of the verification device, it being particularly advantageous to use light outside the visible region as this will make fraudulent replication of the device more difficult. Furthermore the light source may comprise a number of individual light sources operating at discrete wavelengths corresponding to the absorption characteristics of the Langmuir-Blodgett films. Thus the differing wavelength light sources can be activated sequentially providing the requisite intensity versus wavelength information hence no chromatic separation of the reflected or transmitted light from device 1 will be necessary.

It will be appreciated that in the system described hereinbefore by way of example that, whilst the example of reflection of light from the verification device 1 is used to verify the device, it is also equally viable to employ transmission of light through the device instead. This would entail employing an optically transparent substrate with light passing through the device from one side to the other.

The verification device in accordance with the present invention is a lightweight, robust, low cost, wear-proof item which involves no moving parts and is immune to damage by electric or magnetic fields. The device is also capable of remote non-contact operation such as, for example, access control via a window or door glass. It may be advantageous for a system in accordance with the present invention to employ optical fibres to carry light from a central control point for verification of the verification device.

It will be appreciated that whilst the particular system described hereinbefore is an access control system, verification devices and systems in accordance with the present invention are also applicable to other types of security systems incorporating a verification device e.g. cheque card verification systems.

It will also be appreciated that as Langmuir-Blodgett films may be deposited on to non-planar surfaces, the verification device need not be planar. Thus devices such as retroreflectors may be used as verification devices in accordance with the present invention.

**Claims**

1. A verification device for a security system incorporates: a Langmuir-Blodgett film incorporating at least one dye, the thickness and composition of the film being controlled such that the film has precisely definable optical absorption characteristics so as to enable the device to be optically verified.

2. A verification device according to Claim 1 wherein the Langmuir-Blodgett film is formed from dye molecules.

3. A verification device according to Claim 1 wherein the Langmuir-Blodgett film is doped with the at least one dye.

4. A verification device according to any preceding claims wherein the thickness of the film is controlled so as to induce optical interference effects within the films.

5. A verification device according to any preceding claim wherein the film incorporates at least two dyes so as to cause absorption of light at least at two different predetermined wavelengths.

6. A security system comprises: a light source, a verification device according to Claim 1 and means for analysis of light from the source after it has been modified by the device.

7. A security system according to Claim 6 in which the analysis of the light modified by the device is achieved by comparing absorption maxima and minima from the resulting spectrum of light.

8. A security system according to Claim 6 wherein the means for analysis includes means for causing chromatic separation of the light and detectors receptive to light of wavelengths corresponding to the wavelengths of the chromatically separated light.

Fig.1.

Fig.2.

13

11

7   5   3

9

1

Fig.3.

16

15

7

5

1

3

6

# Fig.4.

# Fig.5.

# Fig. 6.

*Fig. 7.*

*Fig. 8.*

## DOCUMENTS CONSIDERED TO BE RELEVANT

EP 90304318.0

| Category | Citation of document with indication, where appropriate, of relevant passages | Relevant to claim | CLASSIFICATION OF THE APPLICATION (Int Cl⁵) |
|---|---|---|---|
| A | EP - A1 - 0 284 314 (K & V LICENCING OY) * Totality * | 1,6 | G 07 F 7/12 |
| A | EP - A2 - 0 179 436 (MATSUSHITA ELECTRIC INDUSTRIAL CO., LTD) * Totality * | 1,6 | |
| A | EP - A1 - 0 077 135 (QMC INDUSTRIAL RESEARCH LIMITED) * Totality * | 1,6 | |
| A | EP - A2 - 0 238 759 (KABUSHIKI KAISHA TOSHIBA) * Totality * | 1,6 | |
| A | WO - A1 - 87/00 347 (THE SECRETARY OF STATE FOR DEFENCE IN HER BRITANNIC MAJESTY'S GOVERNMENT OF THE UNITED KINGDOM OF GREAT BRITAIN AND NORTHERN IRELAND) * Totality * | 1,6 | |
| A | DE - A1 - 3 527 298 (SIEMENS AG) * Totality * | 1,6 | |
| A | DE - A1 - 3 038 602 (COPYTEX-ABRECHNUNGSSYSTEME FÜR DIENSTLEISTUNGSAUTOMATEN) * Totality * | 6 | |
| A | DE - A - 1 774 291 (SODECO SOCIETE DES COMPUTEURS DE GENEVE) * Totality * | 6 | |

**TECHNICAL FIELDS SEARCHED (Int Cl⁵)**

G 07 F 7/00
G 07 D 7/00
C 08 G 77/00
G 01 D 15/00
G 02 B 5/00
G 03 C 1/00
G 11 B 7/00
G 11 C 19/00
H 01 L 29/00

The present search report has been drawn up for all claims

| Place of search | Date of completion of the search | Examiner |
|---|---|---|
| VIENNA | 17-09-1990 | BEHMER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

| Category | Citation of document with indication, where appropriate, of relevant passages | Relevant to claim | CLASSIFICATION OF THE APPLICATION (Int Cl⁵) |
|---|---|---|---|
| A | CH - A5 - 669 275 (LGZ) * Totality * -- | 1, 6 | |
| A | CH - A5 - 661 602 (RCA CORPORATION) * Totality * -- | 1, 6 | |
| A | CH - A5 - 653 161 (LGZ) * Totality * -- | 1, 6 | |
| A | GB - A - 2 078 368 (DE LA RUE SYSTEMS LIMITED) * Totality * -- | 6 | |
| A | GB - A - 1 257 271 (LANDIS & GYR AG) * Totality * -- | 1, 6 | |
| A | JP - A -64-26 845 * Totality * -- | 1 | TECHNICAL FIELDS SEARCHED (Int Cl⁵) |
| A | JP - A -64-26 848 * Totality * -- | 1 | |
| A | JP - A -64-26 846 * Totality * -- | 1 | |
| A | GB - A - 2 209 169 (THE PLESSEY COMPANY) * Totality * -- | 1 | |
| A | US - A - 4 423 415 (GOLDMAN) * Totality * -- | 1, 6 | |

The present search report has been drawn up for all claims

| Place of search | Date of completion of the search | Examiner |
|---|---|---|
| VIENNA | 17-09-1990 | BEHMER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

| Category | Citation of document with indication, where appropriate, of relevant passages | Relevant to claim | CLASSIFICATION OF THE APPLICATION (Int. Cl.) |
|---|---|---|---|
| A | US - A - 4 804 613 (MATSUDA et al.) * Totality * | 1,6 | |
| A | US - A - 4 678 736 (HANAMURA et al.) * Totality * | 1 | |
| D,A | US - A - 4 576 439 (GALE et al.) * Totality * | 1,6 | |
| D,A | ADVANCES IN PHYSICS, vol. 34, no. 4, July/August 1985 London and Philadelphia G.G. ROBERTS "An applied science perspective of Langumir-Blodgeltfilms" pages 476-512 * Pages 476-512 * | 1 | |
| | | | TECHNICAL FIELDS SEARCHED (Int. Cl.) |

The present search report has been drawn up for all claims

| Place of search | Date of completion of the search | Examiner |
|---|---|---|
| VIENNA | 17-09-1990 | BEHMER |